# EUROPÄISCHE PATENTSCHRIFT

(11) **EP 4 590 962 B1**
(45) Veröffentlichungstag und Bekanntmachung des Hinweises auf die Patenterteilung: **26.11.2025**
(21) Anmeldenummer: 23764647.6
(22) Anmeldetag: 04.09.2023
(51) Int. Cl.: F03D 15/00, F03D 15/10, F03D 80/70

(54) **BAUREIHE VON ANTRIEBSSTRÄNGEN FÜR WINDKRAFTANLAGEN**
SERIES OF DRIVE TRAINS FOR WIND TURBINES
SÉRIE DE CHAÎNES CINÉMATIQUES POUR ÉOLIENNES

(30) Priorität: 23.09.2022 EP 22197290
(43) Veröffentlichungstag der Anmeldung: 30.07.2025
(73) Patentinhaber: Flender GmbH, 46395 Bocholt (DE)
(72) Erfinder: HAMBRECHT, Ralf, 46395 Bocholt (DE)
(74) Vertreter: Michalski Hüttermann & Partner Patentanwälte mbB
(86) Internationale Anmeldenummer: PCT/EP2023/074110
(87) Internationale Veröffentlichungsnummer: WO 2024/061598

(56) Entgegenhaltungen:
- CN-U- 206 785 944
- US-A1- 2013 300 125
- US-A1- 2017 175 717

## Beschreibung

Die Erfindung betrifft eine Baureihe von Antriebssträngen für eine Windkraftanlage, mit dessen Hilfe ein Drehmoment von einem Rotor der Windkraftanlage an einen Generator der Windkraftanlage übertragen werden kann.

In Windkraftanlagen werden für verschiedene Anforderungsprofile und verschiedene Generatorkonzepte unterschiedliche Antriebsstrangkonzepte verwendet. Beispielsweise können bei einer Off-shore- Windkraftanlage sehr viel höhere Windlasten auftreten als bei einer Windkraftanlage im Binnenland, so dass in dem für die jeweilige Windkraftanlage verwendeten Getriebe eine stärkere oder weniger starke mechanische Abstützung vorgehalten werden soll. Außerdem können unterschiedlich konzeptionierte Generatoren unterschiedliche Eingangsdrehzahlen vorsehen, was zu unterschiedlichen Anforderungen an die Übersetzung des Getriebes führt. Außerdem ist es möglich, dass eine mehr oder weniger flexible Anbindung einer Rotorwelle des Rotors der Windkraftanlage an das Getriebe gefordert wird, beispielsweise um Schwingungen durch eine Rotorblattverstellung zu dämpfen. Dies führt dazu, dass das Getriebe einer Windkraftanlage für den konkreten Einsatzzweck jeweils individuell konfiguriert werden muss, wodurch aufgrund der damit verbundenen konstruktiven Anpassungen des Getriebes die Herstellungskosten hoch sind.

Aus EP 3 767 102 A1 ist es bekannt ein Getriebe einer Windkraftanlage über eine drehsteife Kupplung drehmomentübertragend mit einer Rotorwelle eines Rotors der Windkraftanlage zu verbinden.

Aus WO 2007/085644 A1 und EP 3 232 055 A1 ist es jeweils bekannt ein Rotorwellenlager einer Rotorwelle eines Rotors einer Windkraftanlage innerhalb eines Getriebegehäuses eines Getriebes der Windkraftanlage vorzusehen.

Aus US 2020/0291927 A1 ist es bekannt eine in einem Hauptlager einer Rotorlageranordnung gelagerte Rotorwelle eines Windrotors einer Windkraftanlage über eine in Form einer Bogenverzahnung oder ein elastisches Element ausgestalteten elastischen Kupplung mit einer Ausgangswelle zu koppeln, so dass ein Versatz und Verkippen der Ausgangswelle relativ zu der Rotorwelle und deren Rotorlageranordnung zugelassen werden können.

Aus US 2011/0143880 A1 ist es bekannt eine in einem Hauptlager einer Rotorlageranordnung gelagerte Rotorwelle eines Windrotors einer Windkraftanlage über ein an einem Getriebegehäuse eines Getriebes vorgesehenes Lager in das Innere des Getriebes hineinragen zu lassen oder die nur in der Rotorlageranordnung gelagerte Rotorwelle über eine gelagerte Rutschkupplung zur Begrenzung des zu übertragenen Drehmoments mit einem drehbaren Hohlrad eines Planetengetriebes zu befestigen.

Aus US 2013/0300125 A1 ist eine in einem Hauptlager einer Rotorlageranordnung gelagerte Rotorwelle eines Windrotors einer Windkraftanlage über eine Bogenzahnkupplung mit einem vollständig in einem Getriebegehäuse eines Getriebes vorgesehene Planetenträger gekoppelt, wobei der Planetenträger rotorseitig innerhalb des Getriebegehäuse gelagert ist.

Aus WO 2007/085644 A1 ist es bekannt eine in einem Hauptlager einer Rotorlageranordnung gelagerte Rotorwelle eines Windrotors einer Windkraftanlage über eine an der Rotorwelle angeflanschte Bogenzahnkupplung mit einem vollständig in einem über eine Drehmomentstütze abgestützten Getriebegehäuse eines Getriebes vorgesehenen Planetenträger zu koppeln.

Aus US 2017/175717 A1 ist ein Antriebsstrang für eine Windkraftanlage bekannt, bei dem eine in einer Rotorlageranordnung gelagerte Rotorwelle eines Windrotors über eine flexible Kupplung mit einem eingangsseitigen Planetenträger einer ersten Stufe eines Getriebes gekuppelt ist, wobei die ersten Stufe ein mit einer Gondel der Windkraftanlage und mit einem feststehenden Hohlrad verbundenes Gehäuse aufweist und das Gehäuse der ersten Stufe des Getriebes eine doppelte Schrägkugellageranordnung zur Lagerung des Planetenträgers der ersten Stufe aufweist.

Aus CN 206 785 944 U ist ein Antriebsstrang für eine Windkraftanlage bekannt, bei dem ein eingangsseitiger Planetenträger eines Windgetriebes in einem eingangsseitigen Deckel gelagert ist und in axialer Richtung außerhalb des Deckels über eine Passfeder mit einer Rotorwelle verbunden ist.

Es ist die Aufgabe der Erfindung Maßnahmen aufzuzeigen, die einen kostengünstigen Antriebsstrang für eine Windkraftanlage ermöglichen.

Die Lösung der Aufgabe erfolgt durch eine Baureihe mit den Merkmalen des Anspruchs 1.

Bevorzugte Ausgestaltungen sind in den Unteransprüchen und der nachfolgenden Beschreibung angegeben, die jeweils einzeln oder in Kombination einen Aspekt der Erfindung darstellen können.

Ein Aspekt der Erfindung betrifft eine Baureihe von Antriebssträngen, mit einem für ein erstes Anforderungsprofil ausgelegten ersten Antriebsstrang für eine Windkraftanlage und einem für ein zweites Anforderungsprofil ausgelegten zweiten Antriebsstrang für eine Windkraftanlage, wobei der erste Antriebsstrang und der zweite Antriebsstrang jeweils aufweisen ein Getriebe zur Übertragung und Wandlung eines von einer in einer Rotorlageranordnung gelagerten Rotorwelle eines Rotors stammenden Drehmoments, wobei das Getriebe eine zumindest rotorseitig ungelagerte Eingangs-Getriebekomponente, insbesondere Planetenträger, zum Einleiten des Drehmoments in das Getriebe aufweist, wobei die Eingangs-Getriebekomponente rotorseitig aus einem Getriebegehäuse und/oder einem Hohlrad des Getriebes teilweise herausragt, und eine zur Rotorwelle, zur Rotorlageranordnung und zum Getriebe separat ausgeführte Koppeleinheit zum Zulassen einer drehmomentübertragenden und drehsteifen, insbesondere formschlüssigen, Koppelung der Rotorwelle mit der Eingangs-Getriebekomponente innerhalb der Koppeleinheit, wobei die Koppeleinheit ein Lager zur Lagerung der ungelagerten Eingangs-Getriebekomponente innerhalb der Koppeleinheit aufweist, wobei die Eingangs-Getriebekomponente rotorseitig ausschließlich nur von dem Lager innerhalb der Koppeleinheit gelagert ist, wobei das Getriebe des ersten Antriebsstrangs und das Getriebe des zweiten Antriebsstrangs identisch ausgestaltet sind und die Koppeleinheit des ersten Antriebsstrangs zu der Koppeleinheit des zweiten Antriebsstrangs verschieden ausgestaltet ist, wobei die Anpassung des jeweiligen Antriebsstrangs an das zu erfüllende Anforderungsprofil ausschließlich durch die Koppeleinheit bereitgestellt ist.

Durch die Anpassung der Lagerung der Eingangs-Getriebekomponente innerhalb der separat ausgestalteten Koppeleinheit an verschiedene Anforderungsprofile kann eine Änderung der Konstruktion des Getriebes vermieden werden, so dass ein kostengünstiger Antriebsstrang für unterschiedliche Windkraftanlagen ermöglicht ist.

Die eingangsseitige, insbesondere einzige, Lagerung der Eingangs-Getriebekomponente des Getriebes erfolgt nicht innerhalb des Getriebes, sondern außerhalb des Getriebes. Die rotorseitige Lagerung der ungelagerten Eingangs-Getriebekomponente erfolgt nicht innerhalb des Getriebes, sondern ausschließlich außerhalb des Getriebes in der separat ausgeführten Koppeleinheit. Insbesondere erfolgt die eingangsseitige Lagerung der Eingangs-Getriebekomponente in axialer Richtung axial beabstandet zu einem Getriebegehäuse des Getriebes. Die eingangsseitige Lagerung der Eingangs-Getriebekomponente erfolgt aber auch nicht an einem Rotorlagergehäuse der Rotorlageranordnung oder an der Rotorwelle, sondern ausschließlich innerhalb der Koppeleinheit mit Hilfe des in der Koppeleinheit vorgesehenen mindestens einen Lagers. Die Koppeleinheit ist zu der Rotorwelle, einem die Rotorwelle lagernden Rotorlagergehäuse der Rotorlageranordnung und zu dem Getriebe separat ausgeführt und kann eine separat zu der Rotorwelle, dem Rotorlagergehäuse und dem Getriebe ausgebildete Baueinheit darstellen. Die Eingangs-Getriebekomponente, insbesondere der Planetenträger, des Getriebes ist zumindest rotorseitig ungelagert und wird erst mit Hilfe der separat zu dem Getriebe ausgestalteten Koppeleinheit rotorseitig gelagert. Eine rotorseitige Lagerung der Eingangs-Getriebekomponente erfolgt ausschließlich innerhalb der Koppeleinheit. Dies ermöglicht es, dass eine Anpassung des Getriebes an verschiedene Anforderungsprofile nicht notwendigerweise innerhalb des Getriebes vorgenommen werden muss, sondern lediglich die Koppeleinheit geeignet angepasst wird.

Hierbei kann berücksichtigt werden, dass je nach zu erfüllenden Anforderungsprofil die Lagerung der Eingangs-Getriebekomponente innerhalb der Koppeleinheit auf einen anderen Lagerdurchmesser, insbesondere ein anderer Wellen- und/oder Anschlussdurchmesser, verändert werden kann und/oder gegebenenfalls erforderliche Feder- und/oder Dämpfungselemente an geeigneten Stellen im Drehmomentfluss zwischen der Rotorwelle und der Eingangs-Getriebekomponente vorgesehen werden können. Die Koppeleinheit kann dazu hergerichtet sein eine nach dem zu erfüllenden Anforderungsprofil Dämpfungs- und/oder Koppelungstechnik sowie eine in Abhängigkeit der zu erwartenden mechanischen Lasten geeignete Lagerung der Eingangs-Getriebekomponente bereitzustellen. Die Koppeleinheit kann dadurch als Tiefpassfilter für statische und/oder dynamische Lasten und/oder als Widerlager für zur Abstützung von windkraftinduzierten Biege- und/oder Schwenk- und/oder Kippmomente wirken, so dass sich im Drehmomentfluss nach der Eingangs-Getriebekomponente trotz unterschiedlicher Anforderungsprofile im Wesentlichen vergleichbare, insbesondere nahezu identische, Betriebsbedingungen und Lasten ergeben. Da die Anpassung des Antriebsstrangs an das zu erfüllende Anforderungsprofil ausschließlich durch die Koppeleinheit bereitgestellt wird und individuelle Anpassungen innerhalb des Getriebes eingespart werden können, ist es möglich ein bereits fertig entwickeltes Getriebedesign erneut zu verwenden. Die Entwicklungskosten und Entwicklungszeiten können dadurch signifikant reduziert werden. Durch die Anpassung der Lagerung der Eingangs-Getriebekomponente innerhalb der separat ausgestalteten Koppeleinheit an verschiedene Anforderungsprofile kann eine Änderung der Konstruktion des Getriebes vermieden werden, so dass ein kostengünstiger Antriebsstrang für unterschiedliche Windkraftanlagen ermöglicht ist.

Vorzugsweise ist der erste Antriebsstrang mit einem ersten Generator und der zweite Antriebsstrang mit einem zweiten Generator verbunden, wobei der erste Generator und der zweite Generator für unterschiedliche Leistungsprofile ausgelegt sind. Hierbei wird ausgenutzt, dass das Getriebe über einen gewissen Betriebsbereich durchaus unterschiedlichen ausgangsseitigen Leistungsprofilen genügen kann. Dies ermöglicht es die Anpassung des Antriebsstrangs an das ausgangsseitige Leistungsprofil des Generators eingangsseitig in der Koppeleinheit vorzunehmen. Beispielsweise kann ein für eine höhere Nenndrehzahl ausgelegter Generator im Vergleich zu einem für eine geringere Nenndrehzahl ausgelegten Generator einen höheren Kühlungsbedarf in dem Getriebe erforderlich machen, der durch eine geringere Drosselwirkung bei der Durchleitung von Kühlöl von der Rotorwelle durch die Koppeleinheit in das Getriebe in der Koppeleinheit berücksichtigt werden kann. Unterschiedliche Lasten, insbesondere Kippmomente, die sich daraus ergeben können, ob der Generator im Bereich des Generators an einem Fundament oder Maschinenträger abgestützt ist oder nicht, kann über die Dimensionierung der Koppeleinheit kompensiert werden, ohne dass hierzu Anpassungen im Getriebe erforderlich sind. Zudem kann eine Änderung des Leistungsprofils des Generators, beispielsweise im Falle einer netzseitigen Störung, durch die Koppeleinheit aufgefangen werden, ohne dass hierzu Anpassungen im Getriebe erforderlich sind. Falls die ursprünglich vorgesehene Übersetzung des Getriebes bei einem Austausch des Generators nicht mehr passen sollte, ist es möglich zwischen dem Getriebe und dem Generator eine, insbesondere separat montierbare, Zwischenstufe, beispielweise eine Planetenstufe oder Stirnradstufe, vorzusehen, ohne das übrige Getriebe verändern zu müssen. Die Getriebeübersetzung kann kostenoptimal zu dem Generatornenndrehmoment sowie der Einsatzdrehzahl des Generators gewählt sein. Bei dieser Optimierung können typische Windrotordrehzahlen in Abhängigkeit von Rotordurchmesser, Windklassen, Anlagenleistung und Blattspitzenmaximalgeschwindigkeiten sowie typischen maximalen Schaltfrequenzen elektrischer Bauteile berücksichtigt werden, um ein Kostenoptimum zu erzielen.

Ein Antriebsstrang dieser Baureihe kann leicht ohne Anpassung der Getriebegeneratorkombination für unterschiedliche Antriebstrangkonzepte und verschiedene Anforderungsprofile, beispielsweise für On- und/oder Offshore mit einhergehender besserer Auftrennbarkeit in Transportmodule und reduzierten Logistikkosten oder schallkritische Standorte mit oder ohne Entkopplungselement eigesetzt werden.

Ein weiterer nicht beanspruchter Aspekt betrifft eine Baureihe von Antriebssträngen, mit einem für ein erstes Leistungsprofil ausgelegten ersten Generator und einen mit dem ersten Generator verbundenen ersten Antriebsstrang sowie einem für ein zweites Leistungsprofil ausgelegten zweiten Generator und einem mit dem zweiten Generator verbundenen zweiten Antriebsstrang, wobei der erste Antriebsstrang und der zweite Antriebsstrang jeweils aufweisen ein Getriebe zur Übertragung und Wandlung eines von einer in einer Rotorlageranordnung gelagerten Rotorwelle eines Rotors stammenden Drehmoments, wobei das Getriebe eine zumindest rotorseitig ungelagerte Eingangs-Getriebekomponente, insbesondere Planetenträger, zum Einleiten des Drehmoments in das Getriebe aufweist, wobei die Eingangs-Getriebekomponente rotorseitig aus einem Getriebegehäuse und/oder einem Hohlrad des Getriebes teilweise herausragt, und eine zur Rotorwelle, zur Rotorlageranordnung und zum Getriebe separat ausgeführte Koppeleinheit zum Zulassen einer drehmomentübertragenden und drehsteifen, insbesondere formschlüssigen, Koppelung der Rotorwelle mit der Eingangs-Getriebekomponente innerhalb der Koppeleinheit, wobei die Koppeleinheit ein Lager zur Lagerung der ungelagerten Eingangs-Getriebekomponente innerhalb der Koppeleinheit aufweist, wobei die Eingangs-Getriebekomponente rotorseitig ausschließlich nur von dem Lager innerhalb der Koppeleinheit gelagert ist, wobei das Getriebe des ersten Antriebsstrangs und das Getriebe des zweiten Antriebsstrangs im Wesentlichen identisch ausgestaltet sind und die Koppeleinheit des ersten Antriebsstrangs zu der Koppeleinheit des zweiten Antriebsstrangs verschieden ausgestaltet ist. Ein Antriebsstrang dieser Baureihe kann leicht ohne Anpassung der Getriebegeneratorkombination für unterschiedliche Antriebstrangkonzepte und verschiedene Anforderungsprofile, beispielsweise für On- und/oder Offshore mit einhergehender besserer Auftrennbarkeit in Transportmodule und reduzierten Logistikkosten oder schallkritische Standorte mit oder ohne Entkopplungselement eigesetzt werden. Durch die Anpassung der Lagerung der Eingangs-Getriebekomponente innerhalb der separat ausgestalteten Koppeleinheit an verschiedene eingangsseitige Anforderungsprofile und/oder ausgangsseitige Leistungsprofile kann eine Änderung der Konstruktion des Getriebes vermieden werden, so dass ein kostengünstiger Antriebsstrang für unterschiedliche Windkraftanlagen ermöglicht ist.

Die jeweiligen Anforderungsprofile können sich insbesondere dadurch unterscheiden, dass zumindest in einem begrenzten Umfang unterschiedliche Drehmomente und/oder unterschiedliche Biege- und/oder Schwenkmomente ("tilt and yaw moments"), und/oder unterschiedliche Struktursteifigkeiten und/oder unterschiedliche Drehzahlen und/oder unterschiedliche Axialschwingungen und/oder unterschiedliche Radialschwingungen und/oder unterschiedliche statische und/oder dynamische Kräfte in axialer Richtung und/oder in radialer Richtung und/oder unterschiedliche Schmieranforderungen auftreten können. Zwei miteinander zu vergleichende Anforderungsprofile können sich hierbei in nur genau einer Anforderung oder auch in zwei, drei oder mehr Anforderungen unterscheiden. Die unterschiedlichen Anforderungsprofile kommen insbesondere durch unterschiedliche Standorte einer Windkraftanlage mit unterschiedlichen zu erwartenden Wetterbedingen und/oder unterschiedliche Rotorblattdurchmesser und/oder unterschiedliche Rotorblattgewichte und/oder unterschiedliche aerodynamische Rotorblattprofile und/oder unterschiedliche Regelalgorithmen zum Betrieb der Windkraftanlage und/oder unterschiedlichen vorgesehenen Generatoren zur Stromerzeugung und/oder die Art und Weise einer Rotorblattverstellung zustande.

Die Eingangs-Getriebekomponente ist ein Funktionsbauteil des Getriebes, das in dem Zusammenwirken mit mindestens einer weiteren Getriebekomponente eine Drehzahlübersetzung bewirken kann, die bei konstanten Betriebsverhältnissen permanent von i = 1,0 verschieden ist. Ein Bauteil einer drehzahlkonstanten Kupplung, beispielsweise Steckverzahnung, Kurzverzahung und/oder Bogenverzahnung, oder ein Bauteil einer elastischen Kupplung, die nur eine begrenzte Drehzahlvarianz um einen bei konstanten Betriebsverhältnissen vorliegenden Mittelwert mit der Übersetzung i = 1,0 zulässt, wird in Ermangelung einer bewirkbaren Drehzahlwandlung nicht als eine Getriebekomponente verstanden. Die Eingangs-Getriebekomponente kann beispielsweise eine in dem Getriebe eingetauchte Verzahnung aufweisen, die Teil einer Stirnradverzahnung oder Teil eines Planetengetriebes sein kann. Vorzugsweise ist die Eingangs-Getriebekomponente als ein Planetenträger eines Planetengetriebes ausgestaltet, an dem zu einer Hauptdrehachse radial beabstandete Planetenräder drehbar gelagert sind, so dass die Drehzahl der Eingangs-Getriebekomponente durch die mit einem Sonnenrad und/oder einem Hohlrad kämmenden Planetenräder gewandelt werden kann. Vorzugsweise ist das Hohlrad bewegungsfest, so dass das als Planetengetriebe ausgestaltete Getriebe eine Übersetzung ins Schnelle bewirkt. Vorzugsweise weist das Getriebe mehr als eine Getriebestufe auf, wobei die eingangsseitige Eingangs-Getriebekomponente Teil der in Drehmomentflussrichtung ersten Getriebestufe ist.

Das Lager der Koppeleinheit ist insbesondere dazu ausgestaltet denjenigen Teil der Eingangs-Getriebekomponente, welcher in die Koppeleinheit eingesteckt ist, gegenüber einem vorzugsweise feststehenden Koppelgehäuse relativ drehbar zu lagern. Insbesondere ist das Lager zumindest teilweise in einem gemeinsamen Axialbereich mit der Eingangs-Getriebekomponente angeordnet. Vorzugsweise ist das Lager vollständig innerhalb des Koppelgehäuses der Koppeleinheit vorgesehen, insbesondere mit dem Koppelgehäuses drehfest befestigt. Das Lager kann zusammen mit dem Koppelgehäuses als eine gemeinsame Baueinheit das separat zu dem Getriebe und separat zu dem Rotor ausgebildete Koppeleinheit ganz oder teilweise ausbilden. Die Koppeleinheit ist insbesondere in axialer Richtung zwischen einem Getriebegehäuse des Getriebes und einem zur Lagerung der Rotorwelle vorgesehenen Rotorlagergehäuse der Rotorlageranordnung positioniert. Die aus dem Rotorlagergehäuse der Rotorlageranordnung herausragende Rotorwelle und/oder die aus dem Getriebegehäuse herausragende Eingangs-Getriebekomponente können teilweise in die Koppeleinheit, insbesondere in das Koppelgehäuse, eingesteckt, das heißt eingeführt, sein. Das Lager kann insbesondere zur Abstützung von über die Rotorwelle und/oder über die Eingangs-Getriebekomponente eingeleitete Kippmomente ausgestaltet sein. Das Lager kann hierzu insbesondere zur Abtragung signifikanter Axiallasten ausgestaltet sein. Dadurch ist es insbesondere möglich, dass für unterschiedliche Antriebsstrangkonzepte und unterschiedliche Lagerungen der Rotorwelle das Getriebe nur für ein bestimmtes zu übertragenes Drehmoment ausgelegt werden braucht, ohne dass es erforderlich ist je nach Anwendungsfall unterschiedliche Axiallasten zu kompensieren. Eine Kompensation unterschiedlicher Axiallasten kann durch eine geeignete Anpassung des Lagers in der Koppeleinheit erreicht werden.

Die Rotorlageranordnung ist in Drehmomentrichtung vor dem Getriebe und der Koppeleinheit vorgesehen. Die Rotorlageranordnung weist ein feststehendes Rotorlagergehäuse auf, in dem mindestens ein auch als "Hauptlager" bezeichnetes Rotorlager vorgesehen ist, mit dessen Hilfe die mit dem (Wind-)Rotor gekoppelte Rotorwelle gelagert werden kann. Insbesondere sind mindestens zwei in axialer Richtung zueinander beabstandete Rotorlager vorgesehen. In der Regel sind die mindestens zwei Rotorlager in axialer Richtung deutlich zueinander beabstandet, um die sehr erheblichen Lasten des Rotors abstützen zu können. Die Rotorlager und das Rotorlagergehäuse der Rotorlageranordnung sind dazu ausgelegt das Eigengewicht des Rotors und der Rotorwelle sowie die im Betrieb der Windkraftanlage an dem Rotor angreifenden Windlasten abzustützen. Die Rotorlageranordnung ist eine zum Getriebe sowie zur Koppeleinheit separate Baueinheit. Die Koppeleinheit ist eine von dem Getriebe und der Rotorlageranordnung verschiedene separate Baueinheit. Die Rotorwelle kann an einer von dem Rotor weg weisenden Axialseite aus dem Rotorgehäuse der Rotorlageranordnung herausragen. Der aus dem Rotorgehäuse der Rotorlageranordnung herausragende Teil kann mittelbar oder unmittelbar mit der Eingangs-Getriebekomponente, insbesondere Nabe eines Planetenträgers, gekoppelt werden. Vorzugsweise kann die Rotorwelle hierzu teilweise in die Koppeleinheit eintauchen und innerhalb der Koppeleinheit drehmomentübertragend und drehsteif, insbesondere starr und/oder formschlüssig, mit der Eingangs-Getriebekomponente gekoppelt werden.

Die Koppeleinheit kann die drehmomentübertragende Koppelung der von der Rotorlageranordnung gelagerten Rotorwelle mit der Eingangs-Getriebekomponente innerhalb der Koppeleinheit insoweit zulassen, indem die Koppeleinheit für die Koppelung der Rotorwelle mit der Eingangs-Getriebekomponente genügend Bauraum vorhält sowie zusätzlich eine Zugänglichkeit für ein Werkzeug bereitstellt, um mit Hilfe des Werkzeugs die Koppelung, beispielsweise eine Flansch-Verschraubung, herbeizuführen. Hierbei ist es möglich, dass die Eingangs-Getriebekomponente bereits in dem Lager der Koppeleinheit gelagert ist, wenn die drehmomentübertragende Koppelung mit der Rotorwelle herbeigeführt ist, wodurch die Montage vereinfacht ist. Es ist aber auch möglich, dass die Eingangs-Getriebekomponente erst durch die mit Hilfe des Werkzeugs zur Herstellung der drehmomentübertragende Koppelung aufgebrachten Kräfte in das Lager bewegt, insbesondere hereingezogen, wird. Dies erleichtert es innerhalb der Koppeleinheit zwischen der rotorseitig, das heißt eingangsseitig, zuvor ungelagerte Eingangs-Getriebekomponente und dem Lager der Koppeleinheit eine Presspassung vorzusehen und die Eingangs-Getriebekomponente in das Lager der Koppeleinheit einzupressen. Das Lager der Koppeleinheit kann dadurch bei der drehmomentübertragenden Koppelung der Rotorwelle mit der Eingangs-Getriebekomponente vormontiert in der Koppeleinheit vorgesehen sein und eine verschleißarme Lagerung der Eingangs-Getriebekomponente erreichen. Anstatt das Getriebe und die Rotorlageranordnung unmittelbar miteinander zu verbinden und hierzu sowohl die Ausgangsseite der Rotorlageranordnung und die Eingangsseite des Getriebes vollständig lagern zu müssen, kann mit Hilfe des zu der Rotorlageranordnung und zu dem Getriebe separat ausgeführten Koppeleinheit eine mittelbare Verbindung des Getriebes mit der Rotorlageranordnung erreicht werden, wobei die Koppeleinheit zusammen mit dem Lager für die Eingangs-Getriebekomponente kostengünstig ausgetauscht werden kann, um das Getriebe für ein anderes Anforderungsprofil anzupassen. Die Koppeleinheit ist insbesondere in axialer Richtung kürzer als in radialer Richtung. Vorzugsweise kann die Koppeleinheit auf die Eingangs-Getriebekomponente und/oder auf die Rotorwelle aufgesteckt werden. Die Koppeleinheit erfüllt nicht nur die Funktion eine Koppelung der Rotorwelle mit der Eingangs-Getriebekomponente zuzulassen, sondern zusätzlich die Funktion die Eingangs-Getriebekomponente zu lagern und/oder als in axialer Richtung wirkendes Widerlager die Rotorwelle gegen Windlasten abzustützen. Vorzugsweise stellt die Koppeleinheit die einzige Lagerung der Eingangs-Getriebekomponente bereit, so dass innerhalb des Getriebes keine direkte Lagerung der Eingangs-Getriebekomponente vorgesehen werden muss. Gegebenenfalls ist die Eingangs-Getriebekomponente von dem Getriebegehäuse verliersicher in dem Getriebe zurückgehalten. Vorzugsweise kann die Rotorwelle teilweise in die Koppeleinheit eintauchen und innerhalb der Koppeleinheit drehmomentübertragend und drehsteif, insbesondere starr und/oder formschlüssig, mit der Eingangs-Getriebekomponente gekoppelt sein. Insbesondere ist die Koppelung zwischen der Rotorwelle und dem Eingangs-Getriebeelement sowohl unbegrenzt drehmomentübertragend als auch im Wesentlichen drehzahlfest ausgestaltet. Die Koppelung ist insbesondere formschlüssig ausgeführt, so dass ein unter Last überwindbarer Reibschluss zwischen der Rotorwelle und dem Eingangs-Getriebeelement vermieden ist.

Die Windkraftanlage weist insbesondere einen mit einem Untergrund verbundenen Turm auf, auf dem eine Gondel vorgesehen ist. In der Gondel kann der Antriebsstrang vorgesehen sein. Der Antriebsstrang kann über einen Maschinenträger, der als Fundament dienen kann, mit der Gondel befestigt sein. Die mit der Koppeleinheit verbundene Rotorwelle kann aus der Gondel herausragen und außerhalb der Gondel über eine Rotornabe mit Rotorblättern verbunden sein, um den (Wind-)Rotor der Windkraftanlage auszubilden. Ein Anstellwinkel der Rotorblätter kann insbesondere mit Hilfe einer Rotorblattsteuerung verändert werden, insbesondere um die über den Rotor eingeleitenden Lasten in Abhängigkeit von den aktuellen Wetterverhältnissen einzustellen und/oder Überlasten zu vermeiden. Die Eingangs-Getriebekomponente kann eingangsseitig, also auf den Rotor zu gerichtet, aus dem Getriebe, insbesondere einem Getriebegehäuse, herausragen und dadurch leicht mit der Koppeleinheit gekoppelt werden.

Das Getriebe kann eine Ausgangs-Getriebekomponente, insbesondere eine Sonnenradwelle, aufweisen, die ausgangsseitig, als von dem Rotor weg gerichtet, auf einen Generator zu weist. Die Ausgangs-Getriebekomponente kann aus dem Getriebe, insbesondere dem Getriebegehäuse, herausragen und in ein Generatorgehäuse des Generators hineinragen, wo die Ausgangs-Getriebekomponente des Getriebes mit einer Generatorwelle eines Rotors einer elektrischen Maschine des Generators verbunden sein kann. Alternativ kann die Generatorwelle des Generators in das Getriebe hineinragen und, insbesondere innerhalb des Getriebegehäuses mit der Ausgangs-Getriebekomponente verbunden sein. Der Generator kann aus dem eingeleiteten Drehmoment elektrische Energie erzeugen, die insbesondere einem Stromnetz zugeführt werden kann.

Insbesondere ist vorgesehen, dass das Getriebe mindestens eine Planetenstufe mit einem Planetengetriebe aufweist und die Eingangs-Getriebekomponente ein Planetenträger des zur Rotorwelle weisenden Planentengetriebes ist, wobei der Planetenträger eine zur Rotorwelle hin abstehende ungelagerte Planetenträgernabe aufweist, wobei die Planetenträgernabe in der Koppeleinheit gelagert ist. Die von einer Planetenträgerwange abstehende Planetenträgernabe kann leicht in die Koppeleinheit eingesteckt und innerhalb der Koppeleinheit direkt oder indirekt gelagert werden. Die Planetenträgernabe kann auch leicht aus einem Getriebegehäuse des Getriebes herausragen, so dass keine signifikanten Anpassungen bei dem Getriebe erforderlich sind, um die Koppeleinheit mit der Eingangs-Getriebekomponente zu koppeln. Das von dem Rotor kommende Drehmoment kann in den jeweiligen Planetenstufen über den Planetenträger eingeleitet und eine Sonnenradwelle ausgeleitet werden, so dass jede Planetenstufe eine betragsmäßig hohe Übersetzung bereitstellen kann. Die Planetenträgernabe ist insbesondere einstückig mit mindestens einer Planetenträgerwange des Planetenträgers ausgestaltet. Der Planetenträger kann in dem Planetengetriebe der Planetenstufe durch das mindestens eine mit dem Sonnenrad und mit dem Hohlrad kämmende Planetenrad zumindest grob zentriert und in der Relativlage grob festgelegt sein, wobei es möglich ist den Planetenträger mit Hilfe mindestens eines Fixierelements für den Transport und die Montage temporär zu fixieren. Die Lagerung in der Koppeleinheit mit Hilfe des Lagers der Koppeleinheit ist hierbei ausreichend denn Planetenträger zu lagern in seiner Relativlage innerhalb der Planetenstufe definiert festzulegen. Das Lager in der Koppeleinheit kann in der Weise ausgelegt sein, dass durch Windkraft induzierte Verformungen und Verlagerungen zwischen einem Anschluss der Rotorwelle in der Koppeleinheit und einem Hohlrad des Getriebes vorzugsweise kleiner oder gleich den zulässigen Verlagerungen im vorentwickelten Rumpfgetriebe, das als Getriebe für verschiedene Antriebsstränge verwendet werden soll, gehalten werden können. Dieses Verhalten kann über die gewählte Struktursteifigkeit der Koppeleinheit sowie der Lager-Vorspannung und/oder des Lagerspieles in der Koppeleinheit vorteilhaft ausgestaltet werden.

Das Getriebe kann genau eine, insbesondere als Planetenstufe ausgestaltete, Getriebestufe aufweisen, wobei das Getriebe vorzugsweise zwei, drei, vier oder mehr Getriebestufen aufweisen kann. Die jeweilige Getriebestufe weist jeweils das Planetengetriebe auf, das als Getriebekomponenten ein Sonnenrad, mindestens ein mit dem Sonnenrad kämmendes Planetenrad, ein mit dem Planetenrad kämmendes Hohlrad und einen das Planetenrad drehbar lagerndes Planetenträger aufweisen kann. Das Sonnenrad sowie eine mit dem Sonnenrad verbundene Sonnenradwelle, der Planetenträger und das Hohlrad sind im Wesentlichen koaxial zueinander angeordnet, wobei vorzugsweise das Hohlrad drehfest festgehalten ist, insbesondere bewegungsfest mit dem unbeweglichen Getriebegehäuse befestigt ist, während das Sonnenrad und der Planetenträger drehbar, insbesondere an dem Getriebegehäuse und/oder aneinander, gelagert sind. Das mindestens eine Planetenrad kann auf einem vorgegebenen Radius zur Drehachse des Getriebes, die mit der Drehachse des Sonnenrads und/oder des Planetenträgers zusammenfällt, drehbar an dem Planetenträger gelagert sein. Hierzu kann das mindestens eine Planentenrad an einem bewegungsfest mit dem Planetenträger befestigten Planetenachse gelagert sein oder das jeweilige Planetenrad weist eine bewegungsfest mit dem Planetenrad befestigte Planetenradwelle auf, die in mindestens einer Planetenradwange, vorzugsweise an beiden axialen Enden in jeweils einer Planetenradwange, des Planetenträgers gelagert ist. Vorzugsweise sind drei, fünf oder sieben Planetenräder vorgesehen, die insbesondere in Umfangsrichtung gleichmäßig verteilt vorgesehen sind.

Vorzugsweise ist vorgesehen, dass das Lager unmittelbar an der Eingangs-Getriebekomponente anliegt oder die Koppeleinheit ein mit der der Eingangs-Getriebekomponente fest verbundenes Übergangsstück zur Bereitstellung einer Lagerfläche auf einem von der Eingangs-Getriebekomponente verschiedenen Lagerdurchmesser aufweist, wobei das Lager unmittelbar an der Lagerfläche des Übergangsstücks anliegt. Wenn das Lager der Koppeleinheit direkt an der Eingangs-Getriebekomponente anliegt, kann die Eingangs-Getriebekomponente selber eine Lagerfläche ausbilden, an der beispielsweise ein Lagerring des Lagers befestigt sein kann. Wenn die Eingangs-Getriebekomponente mit Hilfe des Übergangsstücks nur mittelbar von dem Lager der Koppeleinheit gelagert ist, kann das Übergangsstück mit der Eingangs-Getriebekomponente befestigt sein und es ist das Übergangsstück welches die Lagerfläche für das Lager ausbildet. Die Lagerfläche des Übergangsstücks ist hierbei auf einem Lagerdurchmesser vorgesehen, der von einem Außen- und/oder Innendurchmesser des Teils der Eingangs-Getriebekomponente, der in die Koppeleinheit hineinragt, abweicht. Die Eingangs-Getriebekomponente kann dadurch mit Hilfe des Übergangsstücks auf einem Lagerdurchmesser gelagert werden, der in dem Eingangs-Getriebekomponente ohne Übergangsstück gar nicht vorgesehen ist. Die Lagerung der Eingangs-Getriebekomponente kann dadurch leicht an ein Anforderungsprofil angepasst werden, das aufgrund der auftretenden Lasten und/oder von Bauraumrestriktionen einen von der Eingangs-Getriebekomponente alleine nicht bereitgestellten Lagerdurchmesser erfordert. Eine Anpassung der Eingangs-Getriebekomponente selber ist hierbei nicht erforderlich. Je nach Anforderungsprofil kann ein jeweils anders dimensioniertes Übergangsstück in der Koppeleinheit verbaut sein.

Besonders bevorzugt ist das Lager als Gleitlager oder Wälzlager, insbesondere Kegelrollenlager, ausgestaltet. Je nach Anforderungsprofil kann ein Geitlager oder ein Wälzlager besser geeignet sein. Je nach Anforderungsprofil ist das Lager ausgestaltet nur Radialkräfte, nur Axialkräfte oder sowohl Axial- als auch Radialkräfte abzutragen beziehungsweise bewusst nicht abzustützen. Das Lager kann insbesondere aus mehreren Teillagern zusammengesetzt sein, beispielsweise ein Axiallager, insbesondere Axialgleitlager, und ein Radiallager, insbesondere Radialgleitlager, oder zwei Kegelrollenlager in X-Anordnung oder O-Anordnung. Bauraumrestriktion für eine bestimmte gewünschte Lagerung kann beispielsweise mit Hilfe des Übergangsstücks auch bei einer für die gewünschte Lagerung ungünstige Dimensionierung der Eingangs-Getriebekomponente begegnet werden.

Insbesondere weist die Koppeleinheit mindestens einen Abstützfuß zur Abtragung mechanischer Lasten an ein feststehendes Bauteil, insbesondere ein zur Lagerung der Rotorwelle vorgesehenes Rotorlagergehäuse der Rotorlageranordnung und/oder zur Abtragung mechanischer Lasten an ein Getriebegehäuse und/oder Hohlrad des Getriebes und/oder zur Abtragung mechanischer Lasten an ein Fundament zur Abstützung des Antriebsstrangs, auf. Der Abstützfuß kann insbesondere bewegungsfest mit dem feststehenden Bauteil befestigt sein oder aufgrund der abzutragenden Kräfte an dem feststehenden Bauteil angepresst sein. Mechanische Lasten können dadurch zumindest teilweise an der Eingangs-Getriebekomponente vorbeigeleitet und abgetragen werden, so dass auch bei einem fordernden Anforderungsprofil das Getriebe nicht überlastet wird. Der Abstützfuß ist insbesondere zur Abtragung von Kräften in axialer Richtung und/oder in radialer Richtung vorgesehen.

Vorzugsweise weist die Koppeleinheit eine Drehmomentstütze zur Abstützung des von der Rotorwelle kommenden Drehmoments an ein/das feststehende(s) Bauteil, insbesondere ein zur Lagerung der Rotorwelle vorgesehenes Rotorlagergehäuse der Rotorlageranordnung und/oder zur Abtragung mechanischer Lasten an ein Getriebegehäuse und/oder Hohlrad des Getriebes und/oder zur Abtragung mechanischer Lasten an ein Fundament zur Abstützung des Antriebsstrangs, auf. Die Drehmomentstütze ist insbesondere zur Abtragung von Kräften in Umfangsrichtung vorgesehen. Durch die außerhalb des Getriebes vorgesehene Drehmomentstütze der Koppeleinheit kann braucht eine Abstützung des Drehmoments nicht in dem Getriebe vorgesehen sein. Je nach Anforderungsprofil kann die Drehmomentstütze der Koppeleinheit für größere oder kleinere Lasten dimensioniert sein, ohne dass hierzu Anpassungen in dem Getriebe erforderlich sind.

Besonders bevorzugt weist die Koppeleinheit ein Axial-Federelement und/oder ein Axial-Dämpferelement zur nachgiebigen Abstützung von, insbesondere durch das Eigengewicht des Getriebes verursachten, Axialkräften auf. Eine Gewichtskraft des Getriebes kann ein Kippmoment aus einer Radialebene des Getriebes heraus aufprägen. Dieses Kippmoment kann von dem Axial-Federelement und/oder ein Axial-Dämpferelement der Koppeleinheit abgestützt werden und ein Kippen aus der Radialebene verhindert beziehungsweise auf ein tolerierbares Ausmaß begrenzt werden. Je nach Einbausituation des Getriebes im Antriebsstrang und dem vorgesehenen Anforderungsprofil kann ein jeweils anderes Kippmoment auftreten. Dies kann über die angepasste Dimensionierung des Axial-Federelement und/oder des Axial-Dämpferelement abgefangen werden, ohne dass hierzu Anpassungen innerhalb des Getriebes erforderlich sind.

Insbesondere weist die Koppeleinheit eine mit der Rotorwelle verbindbare elastische Kupplung auf, wobei die elastische Kupplung drehsteif und in axialer Richtung und/oder in radialer Richtung nachgiebig ausgestaltet ist. Die elastische Kupplung kann das eingeleitete Drehmoment nahezu verlustfrei übertragen, wobei axiale und/oder radiale Stöße gedämpft und/oder getilgt werden können. Beispielsweise weist die elastische Kupplung Blechpakete und/oder Lamellen auf, die in axialer und/oder radialer Richtung federn können, aber in Umfangsrichtung ein Drehmoment drehsteif übertragen können.

Vorzugsweise weist die Koppeleinheit eine, insbesondere zentrische, Durchführungsöffnung zum Durchführen eines Pitchrohrs zwischen der Rotorwelle und dem Getriebe auf. Durch das Pitchrohr können, insbesondere elektrische und/oder hydraulische, Steuerleitungen für den Betrieb einer Rotorblattverstellung durch das Getriebe, durch die Koppeleinheit und durch die Rotorwelle geführt werden, um einen Anstellwinkel von mit einer Rotornabe der Rotorwelle verbundenen Rotorblättern verstellen zu können. Der Betrieb einer Rotorblattverstellung wird durch die Koppeleinheit nicht signifikant beeinträchtigt.

Besonders bevorzugt weist die Koppeleinheit einen Schmierstoffkanal zum Austausch eines Schmierstoffs, insbesondere Schmieröl, zwischen der Rotorwelle und der Eingangs-Getriebekomponente auf. Vorzugsweise kann der Schmierstoff auch zur Schmierung des Lagers der Koppeleinheit verwendet werden und über einen hierzu vorgesehenen Schmierkanal von dem Schmierstoffkanal abgezweigt werden. Durch den Schmierstoffkanal der Koppeleinheit kann auch durch die Koppeleinheit hindurch eine gemeinsame Schmierstoffversorgung für den Rotor und das Getriebe ermöglicht werden. Insbesondere ist es möglich über die Dimensionierung des Strömungsquerschnitts des Schmierstoffkanals in der Koppeleinheit einen Schmierölstrom an unterschiedliche Anforderungsprofile anzupassen, ohne dass innerhalb des Getriebes Veränderungen an dem Schmierungskonzept vorgenommen werden müssen. Ein Drosseleffekt des Schmierstoffkanals in der Koppeleinheit kann hierzu größer oder geringer eingestellt werden.

Insbesondere weist die Koppeleinheit mindestens ein von radial außerhalb der Koppeleinheit zugängliches Rotor-Befestigungsmittel zur lösbaren Befestigung der Koppeleinheit mit der Rotorwelle und/oder mindestens ein von radial außerhalb der Koppeleinheit zugängliches Getriebe-Befestigungsmittel zur lösbaren Befestigung der Koppeleinheit mit der Eingangs-Getriebekomponente des Getriebes auf. Die Koppeleinheit kann mit dem Getriebe vormontiert sein und mit Hilfe des Rotor-Befestigungsmittels leicht mit der Rotorwelle befestigt werden. Es ist auch möglich, dass die Koppeleinheit mit der Rotorwelle vormontiert sein kann und mit Hilfe des Getriebe-Befestigungsmittels leicht mit der Eingangs-Getriebekomponente befestigt werden kann. Vorzugsweise braucht das Koppelelement für die Koppelung des Getriebes mit dem Rotor weder mit der Rotorwelle noch mit der Eingangs-Getriebekomponente vormontiert zu sein, sondern kann mit Hilfe der leicht zugänglichen Rotor-Befestigungsmittel und Getriebe-Befestigungsmittel nach einer bereits erfolgten Positionierung des Getriebes relativ zum Rotor mit der Rotorwelle und mit der Eingangs-Getriebekomponente befestigt werden. Insbesondere ist das Getriebe auf einem Maschinenträger in axialer Richtung der Rotorwelle relativ verschiebbar geführt, so dass die Eingangs-Getriebekomponente leicht in die, beispielsweise bereits mit der Rotorwelle befestigten, Koppeleinheit eingesteckt werden kann, während ein Monteur hierbei das Einfädeln der Eingangs-Getriebekomponente in die Koppeleinheit gut überwachen und gegebenenfalls eingreifen kann. Wenn die Eingangs-Getriebekomponente in der gewünschten Endlage in der Koppeleinheit eingesteckt ist, kann vorzugsweise mit Hilfe der Getriebe-Befestigungsmittel die Relativlage des Getriebes zum Rotor festgelegt werden.

Ein nicht beanspruchter Gegenstand betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Antriebsstrang, der wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Antriebsstrangs, insbesondere durch 3D-Druck, und/oder bei einer Verarbeitung durch eine Datenverarbeitungseinrichtung zur Durchführung einer technischen Simulation eine Simulation der Funktionsweise des Antriebsstrangs durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einem real produzierten Antriebsstrang und/oder an einem Prototyp der Antriebsstrangs ermittelten Messdaten zu vergleichen. Die Datenpakete des Datenagglomerat sind an die Ausgestaltung des jeweiligen vorstehend beschriebenen Antriebsstrang speziell angepasst, um die Wechselwirkung der Bestandteile des Antriebsstrangs bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für den Antriebsstrang bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu dem jeweiligen Antriebsstrang aneinander angepasst sind. Das Datenagglomerat kann in der Art eines sogenannten "digital twin" eine virtuelle Verkörperung des jeweiligen Antriebsstrang darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt.

Wenn die Datenverarbeitungseinrichtung der Werkzeugmaschine das Datenagglomerat verarbeitet, wird der Antriebsstrang hergestellt, so dass nach der Verarbeitung des Datenagglomerats in der Datenverarbeitungseinrichtung der Antriebsstrang, zumindest in Form eines Prototyps, erhalten wird. Insbesondere kann jeweils ein Datenpaket einen separat ausgeführten Bestandteil des jeweiligen zugeordneten Antriebsstrangs abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit des zugehörigen Antriebsstrangs zu berechnen und/oder vorherzusagen sowie für die Überprüfung, ob der Antriebsstrang auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten des Antriebsstrangs unter Berücksichtigung von, sich insbesondere verändernden, Randbedingungen untersuchen zu können. Dadurch ist es beispielsweise möglich Fliehkrafteffekte bei einzelnen Bestandteilen des Antriebsstrangs in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einem real produzierten Antriebsstrang und/oder an einem Prototyp des Antriebsstrangs ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle des Antriebsstrangs ist dadurch vereinfacht und verbessert.

Durch das Datenagglomerat ist eine kostengünstige Herstellung von Prototypen und/oder computerbasierten Simulationen ermöglicht, um die Funktionsweise des Rotationskörpers und/oder des Haltewerkzeugs zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert.

Es zeigen:
Fig. 1: eine schematische perspektivische Ansicht einer Windkraftanlage,
Fig. 2: eine schematische Seitenansicht eines Teils eines Antriebsstrangs der Windkraftanlage aus Fig. 1,
Fig. 3: eine schematische Schnittansicht einer ersten Ausführungsform einer Koppeleinheit für den Antriebsstrang aus Fig. 2,
Fig. 4: eine schematische Schnittansicht einer zweiten Ausführungsform einer Koppeleinheit für den Antriebsstrang aus Fig. 2,
Fig. 5: eine schematische Schnittansicht einer dritten Ausführungsform einer Koppeleinheit für den Antriebsstrang aus Fig. 2,
Fig. 6: eine schematische Schnittansicht einer vierten Ausführungsform einer Koppeleinheit für den Antriebsstrang aus Fig. 2,
Fig. 7: eine schematische Prinzipdarstellung einer fünften Ausführungsform einer Koppeleinheit für den Antriebsstrang aus Fig. 2 im eingebauten Zustand und
Fig. 8: eine schematische Prinzipdarstellung der Koppeleinheit aus Fig. 6 für den Antriebsstrang aus Fig. 2 im eingebauten Zustand.

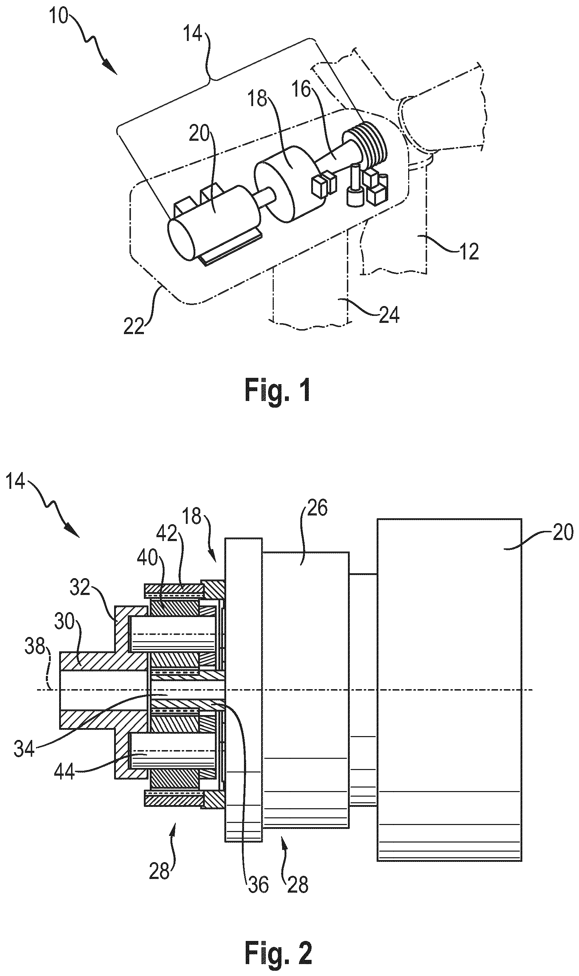

Die in Fig. 1 dargestellte Windkraftanlage 10 kann zur Erzeugung von elektrischer Energie aus Windkraft verwendet werden. Hierzu weist die Windkraftanlage 10 einen Rotor 12 auf, der durch Wind windkraftbetrieben in Drehung versetzt werden kann. Der Rotor 12 ist an einen Antriebsstrang 14 angekoppelt. Hierzu ist der Rotor 12 mit einer Rotorwelle 16 verbunden, die innerhalb des Antriebsstrangs 14 mit einem Getriebe 18 gekoppelt ist, um das über den Rotor 12 und die Rotorwelle 16 eingeleitete Drehmoment zu wandeln. Das in dem Getriebe 18 gewandelte Drehmoment wird einer im Generatormodus betriebenen elektrischen Maschine zugeführt, die einen Generator 20 darstellt. Die von dem Generator 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

Wie in Fig. 2 dargestellt ist kann das mit dem Generator 20 gekoppelte Getriebe 18 des Antriebsstrangs 14 mehrere in einem Getriebegehäuse 26 untergebrachte Planetenstufen 28 aufweisen, von denen die eingangsseitige Planetenstufe 28 ohne Getriebegehäuse 26 dargestellt ist. Die jeweilige Planetenstufe 28 ist als Planetengetriebe ausgestaltet, bei dem ein eingangsseitiges Drehmoment über eine Planetenträgernabe 30 eines Planetenträgers 32 eingeleitet und über eine mit einem Sonnenrad 34 verbundene Sonnenradwelle 36 ausgeleitet werden kann. Die Sonnenradwelle 36 der eingangsseitigen Planetenstufe 28 und die Planetenträgernabe 30 der nachfolgenden Planetenstufe 28 können miteinander verbunden sein, insbesondere einstückig zusammenfallen. An dem, insbesondere zweiwangigen, Planetenträger 32 ist radial beabstandet zu einer Drehachse 38 mindestens ein Planetenrad 40 drehbar gelagert, das sowohl mit dem Sonnenrad 34 als auch mit einem drehfest am Getriebegehäuse 26 befestigten Hohlrad 42 kämmt. Hierbei kann die nach radial außen weisende Außenseite des Hohlrads 42 einen Teil des Getriebegehäuses 26 ausbilden, der nicht separat radial außen von dem übrigen Getriebegehäuse 26 abgedeckt ist. Das Planetenrad 40 ist über einen Planetenbolzen 44 drehbar an dem Planetenträger 32 gelagert, wobei der Planetenbolzen als eine drehfest mit dem Planetenträger 32 befestigte und in dem Planetenrad 40 relativ drehbar gelagerte Planetenradachse oder als eine drehfest mit dem Planetenrad 40 befestigte und in Planetenträgerwangen des Planetenträgers 32 relativ drehbar gelagerte Planetenradwelle ausgestaltet sein kann. Die Planetenträgernabe 30, der Planetenträger 32, das Sonnenrad 34 und die Sonnenradwelle 36 der jeweiligen Planetenstufe 28 sind hohl, insbesondere als Hohlwelle, ausgestaltet, so dass ein Pitchrohr durch das Getriebe 18 hindurch bis zur Rotorwelle 16 des Rotors 12 geführt werden kann.

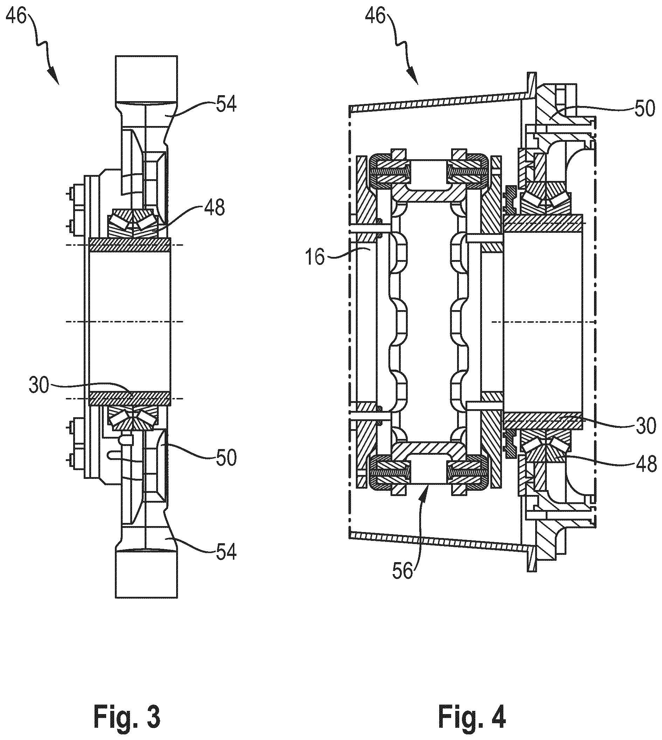

Die Planetenträgernabe 30 kann beispielsweise in die in Fig. 3 dargestellte Koppeleinheit 46 eingesteckt und/oder angeflanscht werden, wobei von dem Planetenträger 32 der eingangsseitigen Planetenstufe 28 des Getriebes 18 zur vereinfachten Darstellung nur die Planetenträgernabe 30 gezeigt ist. Die Koppeleinheit 46 weist ein Lager 48 auf, über welches die Planetenträgernabe 30 und damit der Planetenträger 32 in der Koppeleinheit 46 gelagert ist. Das Lager 48 ersetzt ein ansonsten erforderliches eingangsseitiges Lager des Planetenträgers 32 innerhalb des Getriebes 18, das dadurch eingespart ist. Der Planetenträger 32 des Getriebes 18 ist zumindest rotorseitig ungelagert und wird erst mit Hilfe der separat zu dem Getriebe 18 ausgestalteten Koppeleinheit 46 rotorseitig gelagert. Eine rotorseitige Lagerung des Planetenträgers 32 erfolgt ausschließlich innerhalb der Koppeleinheit 46. In der dargestellten Ausführungsform ist das Lager 48 als zweireihiges Kegelrollenlager in O-Anordnung ausgestaltet. Ein derartiges Lager 48 kann den Planetenträger 32 vollständig lagern, so dass kein weiteres Lager zur Lagerung des Planetenträgers 32 benötigt wird und das Lager 48 der Koppeleinheit 46 das einzige Lager zur Lagerung des Planetenträgers 32 sein kann.

Die Koppeleinheit 46 weist ein über das Lager 48 an der Planetenträgernabe 30 des Planetenträgers 30 gelagertes Koppelgehäuse 50 auf, das bewegungsfest mit dem Getriebegehäuse 26 und/oder dem Hohlrad 42 des Getriebes 18 befestigt werden kann. Zusätzlich oder alternativ ist es möglich, das Koppelgehäuse 50 mit einem Rotorlagergehäuse 52 zur Lagerung der Rotorwelle 16, insbesondere über Feder-und/oder Dämpferelement begrenzt nachgiebig, zu verbinden. Die Rotorwelle 16 kann mittelbar, beispielsweise über eine Zwischenwelle in der Koppeleinheit 46, oder unmittelbar mit der Planetenträgernabe 30 befestigt werden, beispielsweise über eine Flanschverbindung. In dem in Fig. 2 dargestellten Ausführungsbeispiel weist das Koppelgehäuse 50 radial abstehende Drehmomentstützen 54 auf, mit deren Hilfe das zu übertragende Drehmoment geeignet abgestützt werden kann. Wenn das Anforderungsprofil für den Antriebsstrang 14 beispielsweise eine 3-Punkt-Lagerung oder eine 4-Punkt-Lagerung der Rotorwelle 16 vorsieht, können Reaktionsmomente sowie Biege- und/oder Schwenk- und/oder Kipplasten und/oder höhere Drehmomente an dem Koppelgehäuse 50 und den Drehmomentstützen 54 abgestützt werden, ohne das Getriebe 18 zu belasten. Zur Anpassung an derartige Anforderungsprofile können die Drehmomentstützen 54 der Koppeleinheit 46 in ihrer Länge und/oder ihrer Materialdicke angepasst sein. Eine Anpassung innerhalb des Getriebes 18, um das zu übertragene Drehmoment geeignet abstützen zu können, ist nicht erforderlich und kann stattdessen ausschließlich mit Hilfe der entsprechend angepassten Koppeleinheit 46 erfolgen.

Bei der in Fig. 4 dargestellten Ausführungsform der Koppeleinheit 46 kann im Vergleich zu der in Fig. 3 dargestellten Ausführungsform der Koppeleinheit 46 zusätzlich oder alternativ zu der Drehmomentstütze 54 eine elastische Kupplung 56 vorgesehen sein, die im dargestellten Ausführungsbeispiel drehsteif ausgeführt ist, aber in axialer Richtung und/oder radialer Richtung elastisch nachgiebig ausgeführt sein kann. Dies ermöglicht eine biegeweiche und/oder elastische Entkoppelung. Wenn das Anforderungsprofil für den Antriebsstrang 14 über die Rotorwelle 16 eingeleitete Stöße in axialer und/oder radialer Richtung vorsieht, können diese Stöße von der elastischen Kupplung 56 innerhalb der Koppeleinheit 46 gedämpft und/oder getilgt werden, ohne dass hierzu Anpassungen in dem Getriebe 18 vorgenommen werden müssen.

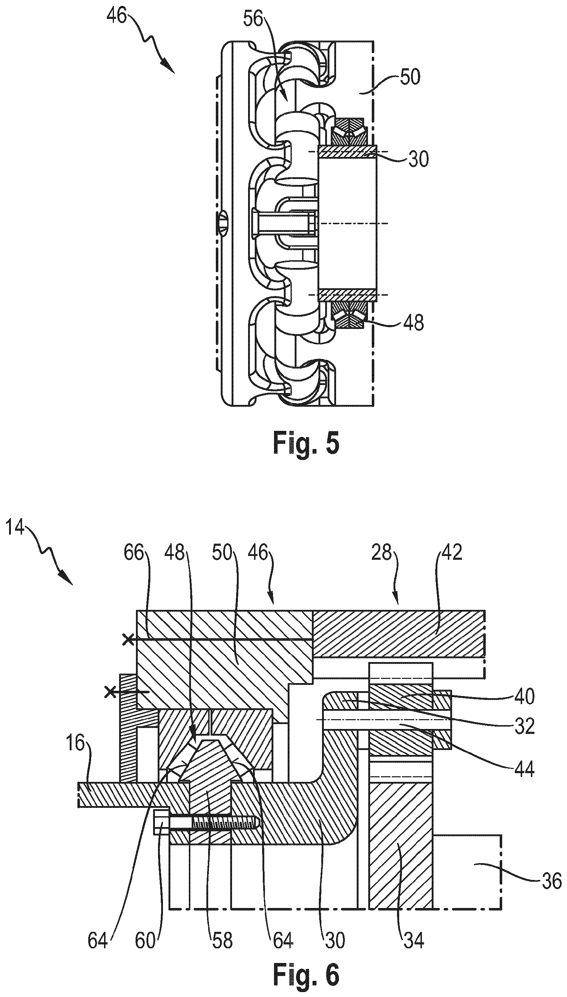

Bei der in Fig. 5 dargestellten Ausführungsform der Koppeleinheit 46 kann im Vergleich zu der in Fig. 4 dargestellten Ausführungsform der Koppeleinheit 46 die elastische Kupplung 56 zwischen dem Rotorlagergehäuse 52 und dem Koppelgehäuse 50 vorgesehen sein. Die elastische Kupplung 56 kann hierzu in Umfangsrichtung nachgiebig ausgestaltet sein, aber insbesondere in axialer und/oder radialer Richtung steif an dem Rotorlagergehäuse 52 und dem Koppelgehäuse 50 angekoppelt sein. Wenn das Anforderungsprofil für den Antriebsstrang 14 schallsensitive Windkraftanlagenstandorte beinhaltet, können von dem Generator 20 und/oder von dem Getriebe 18 stammende Anregungsfrequenzen von der Rotorwelle 16 entkoppelt werden, wodurch Geräuschemissionen vermieden oder zumindest reduziert werden können. Zudem können Drehmomentstöße von der elastischen Kupplung 56 innerhalb der Koppeleinheit 46 gedämpft und/oder getilgt werden, ohne dass hierzu Anpassungen in dem Getriebe 18 vorgenommen werden müssen.

Bei der in Fig. 6 dargestellten Ausführungsform der Koppeleinheit 46 ist im Vergleich zu den in Fig. 3 bis 4 dargestellten Ausführungsformen der Koppeleinheit 46 die Planetenträgernabe 30 indirekt mit Hilfe des Lagers 48 in der Koppeleinheit 46 gelagert. In axialer Richtung zwischen der Rotorwelle 16 und der Planetenträgernabe 30 ist ein Übergangsstück 58 vorgesehen, das mit Hilfe von Rotor-Befestigungsmitteln 60 stirnseitig mit der Rotorwelle 16 und der Planetenträgernabe 30 befestigt ist. Das Übergangsstück 58 kann im Vergleich zu der Planetenträgernabe 30 auf einem größeren Lagerdurchmesser eine Lagerfläche 64 für das Lager 48 ausbilden. Im dargestellten Ausführungsbeispiel ist das Lager 48 in der Art eines Momentenlagers, insbesondere Vierpunktlager, als zweireihiges Kegelrollenlager in X-Anordnung ausgestaltet. Das Koppelgehäuse 50 der Koppeleinheit 46 ist über Getriebe-Befestigungsmittel 66 mit dem Getriebe 18, insbesondere mit dem Hohlrad 42 und/oder mit dem Getriebegehäuse 26, befestigt, wobei die Getriebe-Befestigungsmittel 66 von radial außerhalb der Koppeleinheit 46 leicht zugänglich sind. Die Koppeleinheit 46 kann mit der Rotorwelle 16 und/oder mit dem Rotorlagergehäuse52 bereits vormontiert sein, wenn die rotorseitige Planetenträgernabe 30 des Getriebes 18 in die Koppeleinheit 46 eingesteckt wird. Schließlich kann die Koppeleinheit 46 mit Hilfe der Getriebe-Befestigungsmittel 66 lösbar mit dem Getriebe 18 befestigt werden, um die erreichte gewünschte Relativlage zu fixieren.

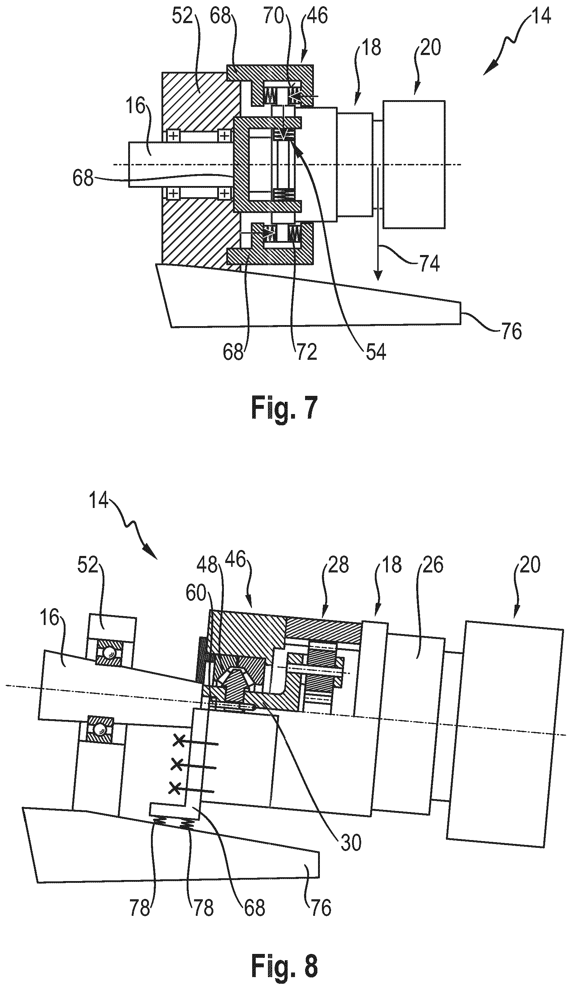

Bei der in Fig. 7 nur prinzipiell dargestellten Ausführungsform der Koppeleinheit 46 ist die Drehmomentstütze 54 über einen Abstützfuß 68 an dem Rotorlagergehäuse 52 abgestützt. Der Abstützfuß 68 kann drehfest mit dem Rotorlagergehäuse 52 befestigt, beispielsweise verschraubt, sein. Zusätzlich oder alternativ kann die Koppeleinheit 46 eine Axialabstützung 70 mit Axial-Federelementen 72 und/oder Axial-Dämpferelementen aufweisen, mit deren Hilfe ein durch ein Eigengeweicht 74 des Getriebes 18 verursachtes Kippmoment über den selber oder einen weiteren Abstützfuß 68 an dem Rotorlagergehäuse 52 abzustützen. Je nach Auslegung der Axial-Federelemente 72 und/oder Axial-Dämpferelemente können von der Rotorwelle 16 eingeleitete Schwingungen in der Axialabstützung 70 gedämpft und/oder getilgt werden. Das Rotorlagergehäuse 52 ist mit einem Maschinenträger 76 befestigt, der ein Fundament für das Getriebe 18 ausbilden kann. Der mindestens eine Abstützfuß 68 kann zusätzlich oder alternativ an dem Maschinenträger 76 abgestützt, insbesondere bewegungsfest befestigt sein.

Bei der in Fig. 8 dargestellten Ausführungsform des Antriebstrangs 14 ist im Vergleich zu der in Fig. 7 dargestellten Ausführungsform des Antriebstrangs 14 die Rotorwelle 16 in dem Rotorlagergehäuse 52 beispielsweise sphärisch gelagert als Teil einer Dreipunktlagerung der Rotorwelle 16. Das Lager 60 der Koppeleinheit 48 kann hierbei nicht nur die Funktion übernehmen die Planetenträgernabe 30 zu lagern, sondern zusätzlich auch die Funktion übernehmen für die Lagerung der Rotorwelle 16 in dem Rotorlagergehäuse 52 ein Widerlager auszubilden, welches insbesondere ein von der Rotorwelle 16 eingeleitetes Kippmoment abstützen kann. Insbesondere ist das Lager 60 als zwei Schrägkugellager in X-Anordnung ausgestaltet, wodurch auftretende Kippmomente gut an dem Koppelgehäuse 50 abgestützt werden können. Das Koppelgehäuse 50 wiederum kann über einen Abstützfuß 68 an einem Fundament, insbesondere den Maschinenträger 68 abgestützt sein, wobei vorzugsweise zwischen dem Abstützfuß 68 und dem Fundament und/oder Maschinenträger 68 ein Feder- und/oder Dämpferelement 78 vorgesehen sein kann. Zusätzlich kann vorgesehen sein, dass über den selben Abstützfuß 68 auch das Eigengewicht des Getriebes 18 und/oder des Generators 20 abgestützt werden kann. Somit kann das Lager 48 der Koppeleinheit 46 auch die Funktion übernehmen ein durch das Eigengewicht des Getriebes 18 und/der des Generators 20 eingeleitete Kippmoment abzustützen, wobei sich vorzugsweise das eingangsseitig von der Rotorwelle 16 in die Koppeleinheit 46 eingeleitete Kippmoment und das ausgangsseitig über die Planetenträgernabe 30 in der Koppeleinheit 46 eingeleitete Kippmoment im statischen Zustand und/oder im dynamischen Zustand zumindest teilweise, insbesondere nahezu vollständig, vorzugsweise zu 90% bis 100%, im Bereich des Lagers 48 kompensieren.

## Patentansprüche

1. Baureihe von Antriebssträngen (14), mit einem für ein erstes Anforderungsprofil ausgelegten ersten Antriebsstrang für eine Windkraftanlage (10) und einem für ein zweites Anforderungsprofil ausgelegten zweiten Antriebsstrang für eine Windkraftanlage (10),
wobei der erste Antriebsstrang und der zweite Antriebsstrang jeweils aufweisen
ein Getriebe (18) zur Übertragung und Wandlung eines von einer in einer Rotorlageranordnung gelagerten Rotorwelle (16) eines Rotors (12) stammenden Drehmoments,
wobei das Getriebe (18) eine zumindest rotorseitig ungelagerte Eingangs-Getriebekomponente zum Einleiten des Drehmoments in das Getriebe (18) aufweist, wobei die Eingangs-Getriebekomponente rotorseitig aus einem Getriebegehäuse (26) und/oder einem Hohlrad (42) des Getriebes (18) teilweise herausragt, und
eine zur Rotorwelle (16), zur Rotorlageranordnung und zum Getriebe (18) separat ausgeführte Koppeleinheit (46) zum Zulassen einer drehmomentübertragenden und drehsteifen Koppelung der Rotorwelle (16) mit der Eingangs-Getriebekomponente innerhalb der Koppeleinheit (46), wobei die Koppeleinheit (46) ein Lager (48) zur Lagerung der ungelagerten Eingangs-Getriebekomponente innerhalb der Koppeleinheit (46) aufweist, wobei die Eingangs-Getriebekomponente rotorseitig ausschließlich nur von dem Lager (48) innerhalb der Koppeleinheit (46) gelagert ist,
wobei das Getriebe (18) des ersten Antriebsstrangs und das Getriebe (18) des zweiten Antriebsstrangs identisch ausgestaltet sind und die Koppeleinheit (46) des ersten Antriebsstrangs zu der Koppeleinheit (46) des zweiten Antriebsstrangs verschieden ausgestaltet ist, wobei die Anpassung des jeweiligen Antriebsstrangs an das zu erfüllende Anforderungsprofil ausschließlich durch die Koppeleinheit (46) bereitgestellt ist.

2. Baureihe nach Anspruch 1, wobei der erste Antriebsstrang mit einem ersten Generator und der zweite Antriebsstrang mit einem zweiten Generator verbunden ist, wobei der erste Generator und der zweite Generator für unterschiedliche Leistungsprofile ausgelegt sind.

3. Baureihe nach Anspruch 1 oder 2, wobei das Getriebe (18) mindestens eine Planetenstufe (28) mit einem Planetengetriebe aufweist und die Eingangs-Getriebekomponente ein Planetenträger (32) des zur Rotorwelle (16) weisenden Planentengetriebes ist, wobei der Planetenträger (32) eine zur Rotorwelle (16) hin abstehende ungelagerte Planetenträgernabe (30) aufweist, wobei die Planetenträgernabe (30) in der Koppeleinheit (46) gelagert ist.

4. Baureihe nach einem der Ansprüche 1 bis 3, wobei das Lager (48) unmittelbar an der Eingangs-Getriebekomponente anliegt oder die Koppeleinheit (46) ein mit der der Eingangs-Getriebekomponente fest verbundenes Übergangsstück (58) zur Bereitstellung einer Lagerfläche (64) auf einem von der Eingangs-Getriebekomponente verschiedenen Lagerdurchmesser aufweist, wobei das Lager (48) unmittelbar an der Lagerfläche (64) des Übergangsstücks (58) anliegt.

5. Baureihe nach einem der Ansprüche 1 bis 4, wobei das Lager (48) als Gleitlager oder Wälzlager ausgestaltet ist.

6. Baureihe nach einem der Ansprüche 1 bis 5, wobei die Koppeleinheit (46) mindestens einen Abstützfuß (68) zur Abtragung mechanischer Lasten an ein feststehendes Bauteil aufweist.

7. Baureihe nach einem der Ansprüche 1 bis 6, wobei die Koppeleinheit (46) eine Drehmomentstütze (54) zur Abstützung des von der Rotorwelle (16) kommenden Drehmoments an ein/das feststehende(s) Bauteil aufweist.

8. Baureihe nach einem der Ansprüche 1 bis 7, wobei die Koppeleinheit (46) ein Axial-Federelement (72) und/oder ein Axial-Dämpferelement zur nachgiebigen Abstützung von Axialkräften aufweist.

9. Baureihe nach einem der Ansprüche 1 bis 8, wobei die Koppeleinheit (46) eine mit der Rotorwelle (16) verbindbare elastische Kupplung (56) aufweist, wobei die elastische Kupplung (56) drehsteif und in axialer Richtung und/oder in radialer Richtung nachgiebig ausgestaltet ist.

10. Baureihe nach einem der Ansprüche 1 bis 9, wobei die Koppeleinheit (46) eine Durchführungsöffnung zum Durchführen eines Pitchrohrs zwischen der Rotorwelle (16) und dem Getriebe (18) aufweist.

11. Baureihe nach einem der Ansprüche 1 bis 10, wobei die Koppeleinheit (46) einen Schmierstoffkanal zum Austausch eines Schmierstoffs zwischen der Rotorwelle (16) und der Eingangs-Getriebekomponente aufweist.

12. Baureihe nach einem der Ansprüche 1 bis 11, wobei die Koppeleinheit (46) mindestens ein von radial außerhalb der Koppeleinheit (46) zugängliches Rotor-Befestigungsmittel (60) zur lösbaren Befestigung der Koppeleinheit (46) mit der Rotorwelle (16) und/oder mindestens ein von radial außerhalb der Koppeleinheit (46) zugängliches Getriebe-Befestigungsmittel (66) zur lösbaren Befestigung der Koppeleinheit (46) mit der Eingangs-Getriebekomponente des Getriebes (18) aufweist.

## Claims

1. Type series of drive trains (14), comprising a first drive train, designed for a first requirement profile, for a wind turbine (10) and a second drive train, designed for a second requirement profile, for a wind turbine (10),
wherein the first drive train and the second drive train each comprise a transmission (18) for transmitting and converting a torque originating from a rotor shaft (16), mounted in a rotor bearing arrangement, of a rotor (12), wherein the transmission (18) has an input transmission component, which is unmounted at least on the rotor side and is intended for introducing the torque into the transmission (18), wherein the input transmission component partially protrudes on the rotor side out of a transmission housing (26) and/or a ring gear (42) of the transmission (18), and
a coupling unit (46), which is separate from the rotor shaft (16), from the rotor bearing arrangement and from the transmission (18) and is intended for permitting a torque-transmitting and rotationally rigid coupling of the rotor shaft (16) to the input transmission component within the coupling unit (46), wherein the coupling unit (46) has a bearing (48) for mounting the unmounted input transmission component within the coupling unit (46), wherein the input transmission component is mounted on the rotor side exclusively only by the bearing (48) within the coupling unit (46),
wherein the transmission (18) of the first drive train and the transmission (18) of the second drive train are identical and the coupling unit (46) of the first drive train is different from the coupling unit (46) of the second drive train, wherein the adaptation of the respective drive train to the requirement profile that is to be implemented is provided exclusively by the coupling unit (46).

2. Type series according to Claim 1, wherein the first drive train is connected to a first generator and the second drive train is connected to a second generator, wherein the first generator and the second generator are designed for different power profiles.

3. Type series according to Claim 1 or 2, wherein the transmission (18) has at least one planet stage (28) with a planetary transmission and the input transmission component is a planet carrier (32) of the planetary transmission facing the rotor shaft (16), wherein the planet carrier (32) has an unmounted planet carrier hub (30) protruding towards the rotor shaft (16), wherein the planet carrier hub (30) is mounted in the coupling unit (46).

4. Type series according to one of Claims 1 to 3, wherein the bearing (48) bears directly against the input transmission component or the coupling unit (46) has a transition piece (58), which is fixedly connected to the input transmission component and is intended for providing a bearing surface (64) on a different bearing diameter than the input transmission component, wherein the bearing (48) bears directly against the bearing surface (64) of the transition piece (58).

5. Type series according to one of Claims 1 to 4, wherein the bearing (48) is in the form of a plain bearing or rolling bearing.

6. Type series according to one of Claims 1 to 5, wherein the coupling unit (46) has at least one supporting foot (68) for transferring mechanical loads to a stationary component.

7. Type series according to one of Claims 1 to 6, wherein the coupling unit (46) has a torque arm (54) for supporting the torque coming from the rotor shaft (16) on a/the stationary component.

8. Type series according to one of Claims 1 to 7, wherein the coupling unit (46) has an axial spring element (72) and/or an axial damper element for flexibly supporting axial forces.

9. Type series according to one of Claims 1 to 8, wherein the coupling unit (46) has an elastic coupling (56) which is connectable to the rotor shaft (16), wherein the elastic coupling (56) is rotationally rigid and axially and/or radially flexible.

10. Type series according to one of Claims 1 to 9, wherein the coupling unit (46) has a passage opening for the passage of a pitch tube between the rotor shaft (16) and the transmission (18).

11. Type series according to one of Claims 1 to 10, wherein the coupling unit (46) has a lubricant duct for swapping a lubricant between the rotor shaft (16) and the input transmission component.

12. Type series according to one of Claims 1 to 11, wherein the coupling unit (46) has at least one rotor fastening means (60), which is accessible radially from the outside of the coupling unit (46) and is intended for detachable fastening of the coupling unit (46) to the rotor shaft (16), and/or at least one transmission fastening means (66), which is accessible radially from the outside of the coupling unit (46) and is intended for detachable fastening of the coupling unit (46) to the input transmission component of the transmission (18).

## Revendications

1. Série de chaînes cinématiques (14), comprenant une première chaîne cinématique conçue pour un premier profil d'exigences pour une éolienne (10) et une deuxième chaîne cinématique conçue pour un deuxième profil d'exigences pour une éolienne (10),
la première chaîne cinématique et la deuxième chaîne cinématique présentant chacune un engrenage (18) destiné à transmettre et à convertir un couple provenant d'un arbre de rotor (16) d'un rotor (12) supporté dans un agencement de palier de rotor,
l'engrenage (18) présentant un composant d'engrenage d'entrée non supporté au moins côté rotor pour introduire le couple dans l'engrenage (18), le composant d'engrenage d'entrée dépassant partiellement côté rotor d'un carter d'engrenage (26) et/ou d'une couronne (42) de l'engrenage (18), et
une unité d'accouplement (46) réalisée séparément de l'arbre de rotor (16), de l'agencement de palier de rotor et de l'engrenage (18) pour permettre un accouplement transmettant le couple et rigide en rotation entre l'arbre de rotor (16) et le composant d'engrenage d'entrée à l'intérieur de l'unité d'accouplement (46), l'unité d'accouplement (46) présentant un palier (48) pour supporter le composant d'engrenage d'entrée non supporté à l'intérieur de l'unité d'accouplement (46), le composant d'engrenage d'entrée étant supporté côté rotor exclusivement par le palier (48) à l'intérieur de l'unité d'accouplement (46),
l'engrenage (18) de la première chaîne cinématique et l'engrenage (18) de la deuxième chaîne cinématique étant conçus de manière identique, et l'unité d'accouplement (46) de la première chaîne cinématique étant conçue différemment de l'unité d'accouplement (46) de la deuxième chaîne cinématique, l'adaptation de la chaîne cinématique respective au profil d'exigences à remplir étant assurée exclusivement par l'unité d'accouplement (46).

2. Série selon la revendication 1, où la première chaîne cinématique est reliée à un premier générateur et la deuxième chaîne cinématique est reliée à un deuxième générateur, où le premier générateur et le deuxième générateur sont conçus pour des profils de puissance différents.

3. Série selon la revendication 1 ou 2, où l'engrenage (18) présente au moins un étage planétaire (28) avec un engrenage planétaire et le composant d'engrenage d'entrée est un porte-satellites (32) de l'engrenage planétaire tourné vers l'arbre de rotor (16), où le porte-satellites (32) présente un moyeu de porte-satellites (30) non supporté, faisant saillie vers l'arbre de rotor (16), où le moyeu de porte-satellites (30) est supporté dans l'unité d'accouplement (46).

4. Série selon l'une quelconque des revendications 1 à 3, où le palier (48) repose directement contre le composant d'engrenage d'entrée ou l'unité d'accouplement (46) présente une pièce de transition (58) reliée de manière fixe au composant d'engrenage d'entrée afin de fournir une surface de support (64) sur un diamètre de palier différent de celui du composant d'engrenage d'entrée, le palier (48) reposant directement sur une surface de support (64) de la pièce de transition (58).

5. Série selon l'une quelconque des revendications 1 à 4, où le palier (48) est conçu sous forme de palier lisse ou de palier à roulement.

6. Série selon l'une quelconque des revendications 1 à 5, où l'unité d'accouplement (46) présente au moins un pied de soutien (68) pour transférer les charges mécaniques à un composant fixe.

7. Série selon l'une quelconque des revendications 1 à 6, où l'unité d'accouplement (46) présente un soutien de couple (54) pour soutenir le couple provenant de l'arbre de rotor (16) sur un/le composant fixe.

8. Série selon l'une quelconque des revendications 1 à 7, où l'unité d'accouplement (46) présente un élément à ressort axial (72) et/ou un élément amortisseur axial pour soutenir de manière flexible les forces axiales.

9. Série selon l'une quelconque des revendications 1 à 8, où l'unité d'accouplement (46) présente un accouplement élastique (56) pouvant être relié à l'arbre de rotor (16), où l'accouplement élastique (56) est rigide en rotation et conçu sous forme flexible dans la direction axiale et/ou dans la direction radiale.

10. Série selon l'une quelconque des revendications 1 à 9, où l'unité d'accouplement (46) présente une ouverture de passage pour faire passer un tube de pas entre l'arbre de rotor (16) et l'engrenage (18).

11. Série selon l'une quelconque des revendications 1 à 10, où l'unité d'accouplement (46) présente un canal de lubrifiant pour échanger un lubrifiant entre l'arbre de rotor (16) et le composant d'engrenage d'entrée.

12. Série selon l'une quelconque des revendications 1 à 11, où l'unité d'accouplement (46) présente au moins un moyen de fixation de rotor (60) accessible radialement depuis l'extérieur de l'unité d'accouplement (46) pour la fixation amovible de l'unité d'accouplement (46) à l'arbre de rotor (16) et/ou au moins un moyen de fixation d'engrenage (66) accessible radialement depuis l'extérieur de l'unité d'accouplement (46) pour la fixation amovible de l'unité d'accouplement (46) au composant d'engrenage d'entrée de l'engrenage (18).
